Europäisches Patentamt

European Patent Office

Office européen des brevets

(11) Veröffentlichungsnummer: **0 002 711**
**A1**

(12) # EUROPÄISCHE PATENTANMELDUNG

(21) Anmeldenummer: **78101631.6**

(51) Int. Cl.²: **B 29 C 17/00**

(22) Anmeldetag: **09.12.78**

(30) Priorität: **22.12.77 DE 2757473**

(43) Veröffentlichungstag der Anmeldung: **11.07.79**
Patentblatt 79/14

(84) Benannte Vertragsstaaten: **CH DE FR GB IT**

(71) Anmelder: **Bayer Aktiengesellschaft, Zentralbereich Patente,Marken und Lizenzen Bayerwerk, D-5090 Leverkusen 1 (DE)**

(72) Erfinder: **Müller, Johann, Reinhard-Brauns-Strasse 8, D-5000 Köln 80 (DE)**
Erfinder: **Brinkmann, Karl-Josef, Ing.-grad., Birkenbergstrasse 77, D-5090 Leverkusen 3 (DE)**
Erfinder: **Mönig, Dieter, Ing.-grad., Hirschweg 58, D-5068 Odenthal (DE)**

(54) Verfahren zum Entformen eines auf einem Kern aufgebauten Kunststoff-Formteils.

(57) Wird auf einen Dorn (1), auf dem ein gewickelter GFK-Behälter (3) aufgebaut wird, zunächst ein fadenförmiges Gebilde (2) fest aneinanderliegend gewickelt, so läßt sich dieser Kern leicht entfernen, wenn zuerst das fadenförmige Gebilde herausgezogen wird. Besonders vorteilhaft sind synthetische Fäden, sie werden beim Herausziehen gestreckt und im Querschnitt verkleinert.

Durch Verwendung von profilierten fadenförmigen Gebilden (2) ist es möglich, die innere Behälteroberfläche zu strukturieren.

EP 0 002 711 A1

BAYER AKTIENGESELLSCHAFT     5090 Leverkusen, Bayerwerk
Zentralbereich     Hö/bc
Patente, Marken und Lizenzen

Verfahren zum Entformen eines auf einem Kern aufgebauten Kunststoff-Formteils

Die Erfindung betrifft ein Verfahren zum Entformen eines auf einem Kern aufgebauten Kunststoff-Formteils, beispielsweise eines gewickelten glasfaserverstärkten Kunststoffbehälters.

Bei der Herstellung gewickelter GFK-Behälter oder gewickelter rohrförmiger Profile ist ein Wickeldorn unerläßlich, dessen Entformung jedoch mit erheblichen Schwierigkeiten verbunden ist. Wenn der Innendurchmesser kleiner als 100 mm ist, kann es ausreichen, den Kern schockartig (z.B. mit flüssiger Luft) abzukühlen, vorausgesetzt, daß dessen Oberfläche hochwertig ist. In der Regel muß sie geschliffen und hochglanzverchromt sein. Bei größeren Durchmessern oder weil Querschnittsänderungen vorkommen, muß der Kern zerlegt werden. Die Kernentformung ist ein aufwendiger Vorgang, und es stellt sich die Aufgabe, die Kernentformung wirtschaftlicher zu gestalten, insbesondere soll die Trennbarkeit zwischen den Kernen und dem aufgebauten Kunststoff-Formteil verbessert werden.

Le A 18 542-Ausland

Diese Aufgabe wird dadurch gelöst, daß vor dem Aufbau des Kunststoff-Formteils ein fadenförmiges Gebilde fest aneinanderliegend auf den Kern gewickelt wird und zur Kernentformung dieses fadenförmige Gebilde herausgezogen wird.

Neben metallisierten, umsponnenen, umwickelten oder mit Kunststoff ummantelten oder lackierten treten aus Reinmetallen und Legierungen, neben Schnüren, Kordeln, Seilen oder Multifilamenten aus Papier, Spleißfasern, Folienbändern, Foliengeflechten, Gestricken oder Geweben aus natürlichen oder synthetischen Materialien, die gegebenenfalls auch ummantelt oder lackiert oder umsponnen sein können, haben sich als besonders geeignet unverstreckte, teilverstreckte oder verstreckte synthetische Drähte erwiesen. Besonders geeignet sind Drähte aus Polyamid, Polyäthylen, Polypropylen, Polyester, Polyäther. Die Querschnitte der fadenförmigen Gebilde können verschiedene Geometrien, beispielsweise Kreise, Dreiecke, Rechtecke, aufweisen.

Der Kern für das Kunststoff-Formteil kann aus verschiedenen Materialien aufgebaut sein, insbesondere kommt auch aus Preisgründen Holz und Kunststoff zum Einsatz.

Auf diese Zwischenlage wird in bekannter Weise im Wickelverfahren der armierte Kunststoffbehälter aufgebaut. Es können auch in anderer Weise, beispielsweise durch Spachteln und/oder Spritzen die verschiedensten verstärkten oder unverstärkten Kunststoffe aufgetragen werden, so z.B. UP-Harze, Epoxidharze, Silikon, Polyurethan und ähnliches. Nach dem Aushärten wird das auf den Kern gewickelte draht-

Le A 18 542

förmige Gebilde von einer Seite her herausgezogen. Es ist vorteilhaft, wenn das verwendete Drahtmaterial gegenüber dem Kunststoff des Formteils selbsttrennende Eigenschaften hat. Bei verstreckbaren fadenförmigen Gebilden wird durch den Sog der Faden gedehnt und gleichzeitig im Querschnitt verkleinert, wodurch sich zwischen Kern und Behälter eine Spaltfläche ausbildet und die Entfernung des ganzen Drahtes problemlos möglich ist. Es ist kein besonderes Trennmittel erforderlich.

Die innere Behälteroberfläche ist im Normalfall nicht ganz glatt, aber in den meisten Fällen ist das nicht störend. Nach einer Weiterbildung des erfindungsgemäßen Fadens wird ein entsprechend profilierter Draht auf den Kern gewickelt, wenn man eine strukturierte oder besonders glatte Innenoberfläche erhalten möchte. Eine bewußte Strukturierung der Oberfläche wird beispielsweise gemacht, wenn die Innenoberfläche als Gewinde für die spätere Aufnahme entsprechender Bolzen ausgebildet werden soll.

Durch die Verwendung bandförmiger, rechteckiger Profildrähte kann auch eine besonders glatte innere Oberfläche erreicht werden. Die Bewicklung des Kernes für die Absicht ihrer Strukturierung der inneren Behälteroberfläche ist nur unerheblich aufwendiger, auf jeden Fall ist des wirtschaftlicher, als wenn die gewünschte Struktur erst nach der Herstellung eingearbeitet werden muß.

Das erfindungsgemäße Verfahren ist im folgenden beispielhaft beschrieben und in den Figuren dargestellt.

Le A 18 542

- 4 -                    0002711

Es zeigen:

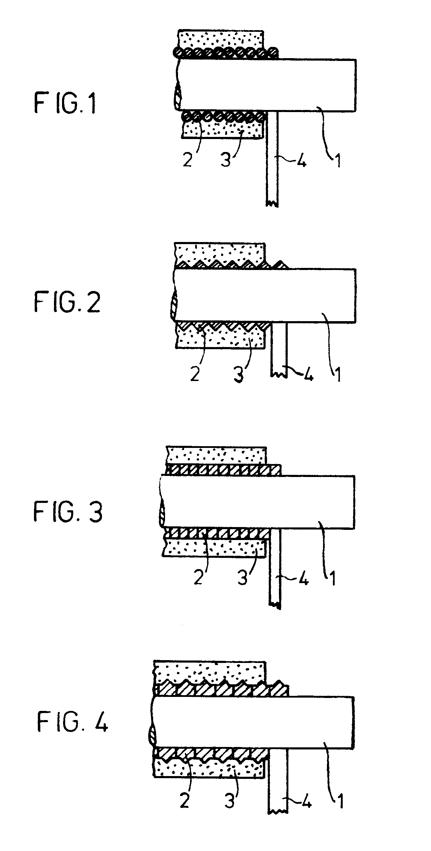

Figur 1    einen Querschnitt durch einen zylindrischen Wickelkörper mit rundem Draht;

Figur 2
bis    4    mit profiliertem Draht umwickelte Kerne.


Auf einem Kern 1 aus Holz wird runder Draht 2 aus Polyamid
gewickelt. Über diesen Kern läßt sich das GFK-Wickelteil 3
aufbauen. Durch den Zug am freien Ende 4 des Drahtes 2
läßt sich der Draht 2 auch bei einem langgestreckten Wickelteil 3 problemlos herausziehen, und nach Entfernung des
Drahtes kann auch der Kern 1 leicht herausgeschoben werden.

In den Figuren 2 bis 4 sind profilierte Drähte 2 auf den
Kern 1 gewickelt. Größe und Querschnittsform hängt von dem
beabsichtigten Zweck ab. Ein Rechteckprofil wie in Figur 3
führt zu einer besonders glatten inneren Oberfläche.


<u>Le A 18 542</u>

## Patentansprüche

1) Verfahren zum Entformen eines auf einem Kern aufgebauten Kunststoff-Formteils, dadurch gekennzeichnet, daß vor dem Aufbau des Kunststoff-Formteils (3) ein fadenförmiges Gebilde (2) fest aneinanderliegend auf den Kern (1) gewickelt wird und zur Kernentformung dieses fadenförmige Gebilde (2) herausgezogen wird.

2) Verfahren nach Anspruch 1, dadurch gekennzeichnet, daß als fadenförmiges Gebilde (2) ein synthetischer Draht aufgewickelt wird.

3) Verfahren nach Ansprüchen 1 und 2, dadurch gekennzeichnet, daß als fadenförmiges Gebilde ein verstreckbarer Draht aufgewickelt wird.

4) Verfahren nach Ansprüchen 1 bis 3, dadurch gekennzeichnet, daß profilierte Drähte (2) aufgewickelt werden.

Le A 18 542

FIG.1

2  3  4  1

FIG.2

2  3  4  1

FIG. 3

2  3  4  1

FIG. 4

2  3  4  1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - B - 1 289 294</u> (DYNAMIT NOBEL) <br> * Das ganze Dokument * <br> --- | 1-4 |
| | <u>DE - C - 262 993</u> (H. ZEUMER) <br> * Das ganze Dokument * <br> --- | 1 |
| A | <u>FR - A - 1 379 738</u> (G. REVERS) | 1 |
| A | <u>US - A - 2 375 093</u> (F. FENWICK) | 1 |
| A | <u>DE - A - 1 958 966</u> (VICKERS) | 1 |

**KLASSIFIKATION DER ANMELDUNG (Int.Cl.²)**

B 29 C 17/00

**RECHERCHIERTE SACHGEBIETE (Int. Cl.²)**

B 29 C
B 29 H

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-03-1979 | DECLERCK |

EPA form 1503.1   06.78